Europäisches Patentamt

European Patent Office

Office européen des brevets

(11) Publication number: **0 296 656 B1**

# EUROPEAN PATENT SPECIFICATION

(45) Date of publication of patent specification: **20.05.92**

(51) Int. Cl.5: **C09K 3/16**, G03C 1/85

(21) Application number: **88201155.4**

(22) Date of filing: **07.06.88**

(54) **Manufacture of antistatic materials.**

(30) Priority: **26.06.87 EP 87201233**

(43) Date of publication of application:
**28.12.88 Bulletin 88/52**

(45) Publication of the grant of the patent:
**20.05.92 Bulletin 92/21**

(84) Designated Contracting States:
**BE DE FR GB**

(56) References cited:
DE-A- 2 209 819     FR-A- 2 001 751
FR-A- 2 386 841     GB-A- 2 092 768
LU-A- 67 779        US-A- 1 570 062
US-A- 3 959 566     US-A- 4 069 053

**PATENT ABSTRACTS OF JAPAN, vol. 4, no.
184 (P-41)[666], 18th December 1980; & JP-
A-55 126 239 (KONISHIROKU SHASHIN
KOGYO K.K.) 29-09-1980**

(73) Proprietor: **AGFA-GEVAERT naamloze ven-
nootschap
Septestraat 27
B-2510 Mortsel(BE)**

(72) Inventor: **Van Gossum, Lucien Janbaptist
Verbrandehoevestraat 4
B-2550 Kontich(BE)**
Inventor: **Van Thillo, Etienne Adrianus
Hemelrijk 13
B-2190 Essen(BE)**

## Description

The present invention relates to a material containing an antistatic layer.

The invention is particularly but not exclusively concerned with recording materials wherein a sheet, ribbon or web carries a recording layer, e.g. a light-sensitive silver halide emulsion layer.

It is known that resin films or resin coated papers of low conductivity become electrostatically charged by friction with dielectric materials and/or contact with electrostatically chargeable transport means, e.g. rollers. The charging occurs particularly easily in a relatively dry atmospheric environment.

Sheets, ribbons and webs made of hydrophobic resin or coated with such resin, e.g. a polyester resin in cellulosetriacetate, are commonly used as base materials or supports in recording materials. Such supports are subjected to frictional contact with other elements during the manufacture of the recording materials, e.g. during a coating or cutting stage, and during use, e.g. during the recording of information or (in the case of silver halide photographic materials) during image-processing or final image inspection or projection. Especially in the reeling-up or unreeling of dry photographic film in a camera or projector high friction may build up, resulting in electrostatic charges that may attract dust or cause sparking. In unprocessed photographic silver halide emulsion materials sparking causes developable fog and degrades the image quality.

In order to reduce electrostatic charging of sheets or webs comprising a hydrophobic resin layer or support without impairing their transparency it is known to apply coatings which are formed of or incorporate ionic compounds. In some light-sensitive materials, such ionic compounds are incorporated in a silver halide emulsion layer. In order to avoid diffusion of ionic compounds out of the silver halide emulsion during its different wet processing treatments, preference has been given to antistatic high molecular weight polymeric compounds having ionic groups at frequent intervals in the polymer chain (ref. Photographic Emulsion Chemistry, by G.F. Duffin, - The Focal Press -London and New York (1966) - Focal Press Limited, p. 168.

Ionic polymers containing carboxylate groups have good antistatic properties in the pH range above 6, but fail because of their low dissociation degree at lower pH values.

Ionic polymers containing sulphonic acid groups or a salt form thereof interact with amino groups of proteinaceous colloids at pH values above 4.5 and, if incorporated into coating solutions containing such colloids, cause a considerable increase in viscosity of the coating solutions and even flocculation thereof.

Ionic polymers containing protonated or quaternized amino groups, although being good antistatic agents are often useless in photographic silver halide emulsion materials because of their fogging activity. This can be counteracted by using substantial amounts of anti-fogging agents, but only at the expense of photographic sensitivity. Moreover, such ionic polymers are not compatible with the use of anionic wetting agents as often used in the coating composition of such materials because the cationic part of said polymers interact with the wetting agents and form large complex compounds having little or no antistatic effect.

From US-P 3,525,621, more particularly from its Example 11, it is known to apply on a cellulosetriacetate film base an antistatic layer comprising colloidal silica and (p-[1,1,3,3-tetramethyl-butyl]-phenoxyethoxyethyl sodium sulphonate as organic surface active agent together with a cellulose ether as binder.

From said US-P (column 3, lines 34-41) can be learned that colloidal silica alone imparts a very small antistatic effect and the surface active agent being an ionic organic agent when used alone imparts a better antistatic effect but the two used together provide an antistatic effect that is significantly greater than would be expected from either material alone.

According to said US-P for best results colloidal silicas are used having particles of large surface area of the order of 200-235 sq.meters per gram or approximate particle diameter of about 5-30 nanometer.

It has been established experimentally that ionic type surface active agents acting as antistatic agents are subject to leaching out during photographic aqueous processing whereby the antistatic character owing to said surface active agent markedly decreases, so that therewith when the thus coated materials are subjected to an aqueous treatment such as in the processing of photographic silver halide emulsion material no permanent antistatic character can be maintained.

It is object of the present invention to provide a cellulosetriacetate base material that is coated with colloidal silica under such conditions that said base obtains a particularly high surface conductivity and retains said conductivity even after aqueous treatment without need of additional binding agent to obtain a good adherence of the antistatic layer to said base.

Other objects and advantages of the present invention will appear from the further description and examples.

In accordance with the present invention a method is provided of applying an antistatic layer containing colloidal silica onto a self-supporting cellulose triacetate element or supported cellulose triacetate layer, wherein said antistatic layer is applied directly onto the cellulose triacetate from a liquid coating composition containing either colloidal silica at a pH not higher than 7 or containing colloidal silica at a pH of 7 and higher but then in combination with lithium cations as the sole metal cations, and wherein the coating liquid contains from 50 to 95% by volume of acetone with respect to the total content of water and acetone in said composition, which composition optionally contains a binding agent in an amount not surpassing 15 % by weight of the solid content of the antistatic layer, said colloidal silica being applied at a coverage from 50 to 500 mg/m2 and having a particle size not larger than 10 nm and a specific area of at least 300 sq.m per gram.

The optionally present binding agent has preferably a good adherence to cellulose triacetate and is e.g. a cellulose ester, preferably cellulose diacetate.

The thickness of the dried antistatic layer is e.g. in the range of 0.02 to 0.2 micrometer.

Preferably the colloidal silica has a specific surface area of at least 500 sq.m per gram.

Aqueous dispersions of colloidal silica having a specific surface area of at least 300 sq.m per gram are commercially available under the trade names BAYER-KIESELSOL 300 and 500 of Bayer A.G. Leverkusen - W. Germany. The grain size of said colloidal silica is smaller than 10 nanometer.

The specific surface area of the colloidal silica is determined according to the BET-value method described by S. Brunauer, P. H. Emmett and E. Teller in J. Amer. Chem. Soc. 60, 309-312 (1938).

Acetone has the property of slightly swelling the cellulose triacetate and makes on drying the antistatic coating strongly adhering thereto without the need of substantial amounts of binding agent. Apart from the strong adherence a thus applied antistatic layer serves also a anticurling layer whereby the additional coating of a separate anticurling layer becomes superfluous. Very good anticurling properties are obtained with an acetone content in the range of 75 to 90 % by volume with respect to the total content of water and acetone in the coating composition.

The material according to the present invention is used e.g. in sheet, ribbon or web form.

An important use of an antistatic coating applied as defined above is in the manufacture of transparent photographic film materials having a cellulose triacetate film support.

Acid type colloidal silica dispersions for use according to the present invention contain preferably phosphoric acid.

When starting with alkaline (pH larger than 7) commercial colloidal silica dispersions containing metal ions such as sodium or potassium ions, these ions have to be replaced by lithium ions since in the alkaline pH range only lithium ions provide sufficient compatibility of the coloidal silica with the coating liquid containing acetone.

The replacement of sodium and/or potassium ions by lithium ions proceeds advantageously by the intermediary of an ion-exchange resin.

For example, an alkaline colloidal silica dispersion containing a strong base such as sodium hydroxide is contacted with a cation exchange resin replacing the sodium ions by hydrogen ions whereupon a lithium hydroxide solution is added to bring the pH at 7 or at a higher value. Suited cation exchange resins are sulphonated polystyrene resin which are commercially available, e.g. LEWATIT S-100 (trade name of Bayer AG - Leverkusen, W-Germany).

In conjunction with the acetone a watermiscible alcohol, e.g. methanol may be used in minor amounts.

Preferred antistatic coatings applied according to the present invention provide at a relative humidity of 30% a surface resistivity lower than $10^{12}$ ohm/square.

The surface resistivity of a coated antistatic layer expressed in ohm/square is measured by a test proceeding as follows :

After coating the resulting layer is dried and conditioned at a specific relative humidity. The surface resistivity (expressed as ohm/square) is measured by placing two conductive copper poles having a length of 10 cm parallel to each other at a distance of 1 cm and measuring the resistance built up between said electrodes with a precision ohm-meter.

A cellulose triacetate web or sheet coated according to the present invention can incorporate more than one antistatic layer, each incorporating the colloidal silica applied as herein defined. For example there may be one such antistatic layer on each side of the support in direct contact with the cellulose triacetate resin. In that way a particularly high resistance to dust attraction and sparking can be achieved.

In certain embodiments of the method of the present invention a silver halide photographic material is used that is provided at the side opposite to that of the light-sensitive layer(s)) with an antihalation layer containing one or more pigments in admixture with a binder, the said layer being coated onto an antistatic layer as defined herein. The antireflection substance used in the antihalation coating, e.g. carbon black, itself may have antistatic properties. According to another embodiment the antistatic layer containing the above defined colloidal silica is dyed with an antihalation dye that can be removed in the processing, e.g. by alkaline treatment or by a solvent or solvent mixture.

The photographic silver halide emulsion layer(s), when used, can be of any type of composition known to those skilled in the art. For examples of compositions, reference can be made, e.g. to Research Disclosure 17,643 of December 1978.

Apart from their use in photographic silver halide emulsion materials an antistatic layer containing the above defined colloidal silica may be used in materials serving as image-receiving material in the silver complex diffusion transfer process or in a dye diffusion transfer process as described e.g. in Angew. Chem. Int. Ed. Engl. 22, (1983) p. 191-209.

By applying an antistatic layer according to the present invention problems caused by static charges can be avoided or substantially reduced. For example the formation of static charges by contact of a silver halide emulsion layer face with the rear side of the photographic silver halide emulsion material or caused by friction with substances such as rubber and hydrophobic polymeric binder, e.g. the binder constituent of phosphor screens used as X-ray intensifying screens, can be markedly reduced by employing one or more antistatic layers applied in accordance with the present invention. The building up of static charges and subsequent dust attraction and/or sparking, e.g. during loading of films in cassettes, e.g. X-ray cassettes, or in cameras, or during the taking of a sequence of pictures as occurs in automatic cameras using X-ray films, can be avoided.

Although the above defined antistatic layer applied according to the present invention is particularly useful in silver halide emulsion materials it is likewise useful in reducing surface resistivity of cellulose triacetate base materials coated with a diazo-type composition, vesicular-image forming composition, magnetic recording composition, electrographic or electrophotographic recording composition and colouring or matting composition used in mounting or drafting film.

The following are (non-limiting) examples of materials according to the present invention and their manufacture. All percentages and ratios are by weight unless otherwise mentioned.

EXAMPLE 1

Manufacture of photographic material (Material A) having a cellulose triacetate base provided with antistatic layer according to the present invention.

A cellulose triacetate film base having a thickness of 130 micrometer was provided at one side with a gelatin-cellulose nitrate subbing layer. Onto the dried subbing layer a gelatin-silver bromide-iodide emulsion [AgBr/AgI (99/1 mole%)] was applied at a coverage of silver halide equivalent with 2.06 g of silver nitrate per m2. The gelatin to silver halide ratio was 2, the silver halide being expressed as an equivalent amount of silver nitrate. The average grain size of the silver halide was 0.35 micrometer. The emulsion layer included hydroquinone as developing agent at a coverage of 0.40 g per m2.

At the side opposite to that of the silver halide emulsion layer an antistatic layer was coated at a wet coverage of 50 m2/l by applying the following coating composition :

an aqueous colloidal silica dispersion containing 165 g/l silica having a specific surface area of 500 m2 per gram            100 ml

methanol            150 ml

acetone            750 ml

The colloidal silica dispersion used in the coating composition has a pH of 7 and was obtained from an alkaline type colloidal silica dispersion which was treated first with an acidic cation exchange resin followed by the addition of a 10 % aqueous lithium hydroxide solution to reach pH 7.

The surface resistivity of said material A and of the photographic cellulose triacetate base materials of the Examples 2 to 4 hereinafter was measured at 30 % relative humidity (R.H.) "before" and "after" wet photographic processing. The results are given in the Table following the Examples.

EXAMPLE 2

The manufacture of a photographic material B proceeded as described for photographic material A of Example 1 with the difference that at the side opposite to that of the silver halide emulsion layer an antistatic layer was coated at a wet coverage of 80 m2/l by applying the following coating composition :

aqueous colloidal silica dispersion of Example 1            150 ml

acetone            850 ml

EXAMPLE 3

The manufacture of a photographic material C proceeded as described for photographic material A of Example 1 with the difference that at the side opposite to that of the silver halide emulsion layer an antistatic layer was coated at a wet coverage of 80 m2/l by applying the following coating composition :

aqueous colloidal silica dispersion of Example 1          200 ml

5 % solution in acetone of cellulosediacetate (DS : 2.5)          20 ml

acetone          780 ml

DS stands for "substitution degree" with acetate groups, the maximum being three.

EXAMPLE 4

The manufacture of a photographic material D proceeded as described for photographic material A of Example 1 with the difference that at the side opposite to that of the silver halide emulsion layer an antistatic layer was coated at a wet coverage of 100 m2/l by applying the following coating composition :

an originally alkaline colloidal aqueous silica dispersion containing 165 g/l of silica having a specific surface area of 500 m2 per gram which dispersion has been brought at pH 7 with a 10 % aqueous phosphoric acid solution          100 ml

methanol          150 ml

acetone          750 ml

EXAMPLE 5 (comparative example)

The manufacture of a photographic material E proceeded as described for Material A of Example 1 with the difference that the antistatic layer was replaced by an anticurling layer applied at a wet coating coverage of 40 m2/l from following coating composition :

5 % solution in acetone of cellulosediacetate (DS : 2.5)          150 ml

methanol          75 ml

butanol          75 ml

acetone          700 ml

The photographic processing was the same for all samples and consisted in a developing step using an alkaline aqueous activating liquid, a fixing step using an acidic fixing liquid containing aqueous sodium thiosulphate, and a rinsing step wherein demineralized water was used to remove residual watersoluble chemicals.

In the following Table the material notified by U represents an uncoated cellulose triacetate film.

TABLE

| Material | coverage of silica | Surface resistivity $10^{10}$ .ohm/sq. | |
|---|---|---|---|
| | mg/m2 | "before" | "after" |
| A | 330 | 15 | 220 |
| B | 310 | 4.7 | 40 |
| C | 415 | 10 | 17 |
| D | 165 | 7.7 | 330 |
| E | 190 | >100,000 | >100,000 |
| U | - | >100,000 | >100,000 |

**Claims**

1.  A method of applying an antistatic layer containing colloidal silica onto a self-supporting cellulose triacetate element or supported cellulose triacetate layer, wherein said antistatic layer is applied directly onto the cellulose triacetate from a liquid coating composition containing either colloidal silica at a pH not higher than 7 or containing colloidal silica at a pH of 7 and higher but then in combination with lithium cations as the sole metal cations, and wherein the coating liquid contains from 50 to 95 % by volume of acetone with respect to the total content of water and acetone in said composition, which composition optionally contains a binding agent in an amount not surpassing 15 % by weight of the solid content of the antistatic layer, said colloidal silica being applied at a coverage from 50 to 500 mg/m2 and having a particle size not larger than 10 nm and a specific surface area of at least 300 sq.m per gram.

2. A method according to claim 1, wherein said binding agent is a cellulose ester.

3. A method according to claim 2, wherein said binding agent is a cellulose diacetate.

4. A method according to any of the preceding claims, wherein the coating liquid contains from 75 to 90 % by volume of acetone with respect to the total content of water and acetone in said coating composition.

5. A method according to any of claims 1 to 4, wherein said antistatic layer makes part of a photographic material having a cellulose triacetate film support.

6. A method according to claim 5, wherein said photographic material is a photographic silver halide emulsion material.

7. A method according to claim 5 or 6, wherein said material is in the form of a sheet, ribbon or web.

8. A method according to any of the preceding claims, wherein the antistatic layer in dry state has a thickness in the range of 0.02 to 0.2 micrometer.

9. A method according to any of the preceding claims, wherein in conjunction with acetone a watermiscible alcohol is used.

## Revendications

1. Méthode d'application d'une couche antistatique contenant de la silice colloïdale sur un élément autoporteur de triacétate de cellulose ou sur une couche de triacétate de cellulose appliquée sur un support, caractérisée en ce que la couche antistatique est appliquée directement sur le triacétate de cellulose à partir d'une composition de coulée liquide contenant soit de la silice colloïdale dont la valeur de pH est inférieure à 7, soit de la silice colloïdale dont le pH est égal ou supérieur à 7, les cations métalliques étant dans ce cas uniquement représentés par des cations de lithium, et caractérisée également en ce que le liquide de coulée contient, en volume, de 50 à 95 % d'acétone par rapport à la teneur totale en eau et acétone de cette composition, celle-ci pouvant contenir en outre un liant dans des proportions ne dépassant pas 15 % en poids de la teneur en matières solides de la couche antistatique, la silice colloïdale étant présente dans une proportion comprise entre 50 à 500 mg/m$^2$ et ayant une granulométrie ne dépassant pas 1 0 nm, et une aire de surface spécifique étant de 300 m$^2$ par gramme au moins.

2. Méthode selon la revendication 1, caractérisée en ce que le liant est un ester de cellulose.

3. Méthode selon la revendication 2, caractérisée en ce que le liant est du diacétate de cellulose.

4. Méthode selon l'une quelconque des revendications précédentes, caractérisée en ce que le liquide de coulée contient de 70 à 90 % en volume d'acétone par rapport à la teneur totale en eau et acétone de la composition de coulée.

5. Méthode selon l'une quelconque des revendications 1 à 4, caractérisée en ce que la couche antistatique fait partie d'un matériau photographique constitué d'un support de film en triacétate de cellulose.

6. Méthode selon la revendication. 5, caractérisée en ce que le matériau photographique est un matériau photographique d'émulsion à l'halogénure d'argent.

**7.** Méthode selon les revendications 5 ou 6, caractérisée en ce que le matériau se présente sous forme de feuille, de ruban ou de bande.

**8.** Méthode selon l'une quelconque des revendications précédentes, caractérisée en ce que la couche antistatique à l'état sec a une épaisseur allant de 0,02 à 0,2 $\mu$m.

**9.** Méthode selon l'une quelconque des revendications précédentes, caractérisée en ce qu'un alcool miscible à l'eau est utilisé conjointement avec l'acétone.

**Patentansprüche**

**1.** Verfahren zum Auftragen einer kolloidale Kieselerde enthaltenden Antistatikschicht auf ein selbsttragendes Cellulosetriacetat-Element oder eine unterstützte Cellulosetriacetat-Schicht, dadurch gekennzeichnet, daß die Antistatikschicht direkt auf das Cellulosetriacetat aufgetragen wird aus einer Beschichtungsflüssigkeit, weiche entweder kolloidale Kieselerde bei einem pH-Wert von höchstens 7, oder kolloidale Kieselerde bei einem pH-Wert von wenigstens 7, aber dann kombiniert mit Lithium-Kationen als alleinigen Metall-Kationen, enthält, und dadurch, daß die Beschichtungsflüssigkeit 50-90 Volumen-% Aceton, berechnet auf den Gesamtgehalt von Wasser und Aceton der Beschichtungsflüssigkeit, und gegebenenfalls eine Menge Bindemittel von höchstens 15 Gewichts-% des Feststoffgehaltes der Antistatikschicht enthält, wobei die kolloidale Kieselerde im Verhältnis von 50-500 mg/m$^2$ aufgetragen wird und eine Teilchengröße von höchstens 10 nm und eine spezifische Oberfläche von mindestens 300 m$^2$/g hat.

**2.** Verfahren nach Anspruch 1, dadurch gekennzeichnet, daß das Bindemittel ein Celluloseester ist.

**3.** Verfahren nach Anspruch 2, dadurch gekennzeichnet, daß das Bindemittel ein Cellulosediacetat ist.

**4.** Verfahren nach irgendeinem der vorhergehenden Ansprüche, dadurch gekennzeichnet, daß die Beschichtungsflüssigkeit 75-90 Volumen-% Aceton, berechnet auf den Gesamtgehalt von Wasser und Aceton der Beschichtungsflüssigkeit, enthält.

**5.** Verfahren nach irgendeinem der vorhergehenden Ansprüche, dadurch gekennzeichnet, daß die Antistatikschicht ein Teil eines photographischen Materials mit einem Ceilulosetriacetat-Filmträger ist.

**6.** Verfahren nach Anspruch 5, dadurch gekennzeichnet, daß das photographische Material ein photographisches Silberhalogenid-Emulsionsmaterial ist.

**7.** Verfahren nach Anspruch 5 oder 6, dadurch gekennzeichnet, daß das Material die Form einer Folie, einer Bahn oder eines Bandes hat.

**8.** Verfahren nach irgendeinem der vorhergehenden Ansprüche, dadurch gekennzeichnet, daß die Antistatikschicht eine Trockendicke im Bereich von 0,02-0,2 $\mu$m hat.

**9.** Verfahren nach irgendeinem der vorhergehenden Ansprüche, dadurch gekennzeichnet, daß zusammen mit Aceton ein wassermischbarer Alkohol verwendet wird.